# EUROPEAN PATENT SPECIFICATION

(11) **EP 2 999 103 B1**
(45) Date of publication and mention of the grant of the patent: **28.08.2019**
(21) Application number: 14797222.8
(22) Date of filing: 05.05.2014
(51) Int. Cl.: H02M 1/32, H02M 7/483

(54) **CONVERTER AND CONTROL METHOD THEREOF**
WANDLER UND STEUERUNGSVERFAHREN DAFÜR
CONVERTISSEUR ET SON PROCÉDÉ DE COMMANDE

(30) Priority: 15.05.2013 CN 201310179826; 26.12.2013 WO PCT/CN2013/090486
(43) Date of publication of application: 23.03.2016
(73) Proprietor: NR Electric Co., Ltd., Nanjing, Jiangsu 211102 (CN); NR Engineering Co., Ltd., Jiangning Development Zone Nanjing, Jiangsu 211102 (CN)
(72) Inventor: DONG, Yunlong, Nanjing, Jiangsu 211102 (CN); CAO, Dongming, Nanjing, Jiangsu 211102 (CN); TIAN, Jie, Nanjing, Jiangsu 211102 (CN); LI, Haiying, Nanjing, Jiangsu 211102 (CN); WANG, Nannan, Nanjing, Jiangsu 211102 (CN)
(74) Representative: Laufhütte, Dieter
(86) International application number: PCT/CN2014/076781
(87) International publication number: WO 2014/183570

(56) References cited:
- EP-B1- 2 178 200
- WO-A1-2011/042050
- WO-A1-2014/111164
- CN-A- 102 013 695
- CN-A- 102 868 290
- CN-A- 102 868 290
- CN-A- 102 957 378
- CN-A- 103 023 365
- CN-A- 103 036 459
- CN-A- 103 280 989
- US-A1- 2012 243 282
- SCHMITT D ET AL: "DC-side fault current management in extended multiterminal-HVDC-grids", 2012 9TH INTERNATIONAL MULTI-CONFERENCE ON SYSTEMS, SIGNALS AND DEVICES (SSD 2012) : CHEMNITZ, GERMANY, 20 - 23 MARCH 2012, IEEE, PISCATAWAY, NJ, 20 March 2012 (2012-03-20), pages 1-5, XP032180350, DOI: 10.1109/SSD.2012.6198125 ISBN: 978-1-4673-1590-6

## Description

### BACKGROUND OF THE INVENTION

### Field of the Invention

The present invention relates to the field of power and electronics, and in particular, to a voltage source multilevel convertor and a control method thereof.

### Description of Related Art

A modularized multilevel converter is a new converter applicable to high voltage applications and attracting much attention in recent years. In the modularized multilevel converter, sub-modules are cascaded, where the state of each sub-module is separately controlled to enable an alternating voltage outputted by the converter to approach a sine wave, thereby reducing a harmonic content in the output voltage. The modularized multilevel converter solves the series average-voltage problem existing in a two-level voltage source converter and has wide application prospects.

In the "distributed energy stores and converter circuit" of Marquardt Rainer, a modularized multilevel converter (MMC) was first mentioned (patent application publication No.: DE10103031A), where a sub-module of the converter is formed of a half-bridge and a capacitor connected in parallel and two levels, a capacitor voltage and a 0 voltage, can be generated through control at an output port of the sub-module. In 2010, the Trans Bay project, a flexible direct current (DC) transmission project first adopting this topological structure all over the world and undertaken by the Siemens corporation was successfully put into operation, which proves the feasibility of engineering applications of the topological structure of this converter.

On the basis of the topological structure of the modularized multilevel converter, the ABB corporation has modified the structure and proposed a cascade two-level modularized multilevel topological structure (patent application publication No.: US20100328977A1), where this converter differs from the foregoing modularized multilevel converter that connection of the sub-modules is reversed.

The disadvantages of the two modularized multilevel converters are that, when a fault occurs in a DC network, an alternating current (AC) network can provide a fault current to a fault point through a diode of the sub-module, resulting in over-currents at AC and DC sides and at a converter valve, so the DC fault must be removed by tripping an line switch. When a transient fault occurs in the DC network, AC line switches need to be tripped for all of the foregoing two modularized multilevel converters connected to the DC network, so that it takes a long time to restore electricity transmission.

Patent application US 2012/243282 A1 as well as the article "DC-side fault current management in extended multiterminal HVDC grids" by D. Schmitt et al. disclose module multilevel converters having submodules which combine two half-bridge subunits with a connecting means for cutting-off fault currents.

Patent document WO2014/111164 A1, which is prior art according to Article 54(3) EPC, discloses a multilevel converter having both hybrid full-bridge cells and half-bridge cells.

Chinese patent publication CN102957378 A also discloses a multilevel converter having hybrid full bridge cells.

### SUMMARY OF THE INVENTION

### Technical Problem

The objectives of the present invention are to provide a converter which can be locked when a DC fault occurs to prevent an AC system from injecting a fault current into a DC network, so that a transient fault of the DC network can be removed without tripping an AC line switch, thereby rapidly restarting the system. In addition, further provided is a control method.

### Technical Solution

In order to achieve the above objectives, the present invention provides a converter and a control method as defined in the appended independent claims 1 and 9.

Preferred embodiments of the converter are defined in the appended dependent claims 2 - 8.

### Advantageous Effect

Through the above technical solutions, the beneficial effects of the present invention are as follows:
(1) when a fault occurs in a DC network, the converter is locked to prevent an AC network from injecting a fault current into a fault point;
(2) when a transient fault occurs at a DC side, the fault is removed without tripping an AC line switch; and
(3) no DC breaker is required for a two-terminal or multi-terminal DC system formed of the converter provided by the present invention.

### BRIEF DESCRIPTION OF THE DRAWINGS

FIG. 1 is a topological structure diagram of an embodiment of a first sub-module to be included in a converter according to the present invention.
FIG. 2 is a topological structure diagram of an embodiment of another first sub-module to be included in a converter according to the present invention.
FIG. 3 is a topological structure diagram of another embodiment of a first sub-module to be included in a converter according to the present invention.
FIG. 4 is a topological structure diagram of a further embodiment of a first sub-module to be included in a converter according to the present invention.
FIG. 5 is a topological structure diagram of a converter completely formed of first sub-modules.
FIG. 6 is two topological structure diagrams of an additional (second) sub-module to be included in a converter according to the present invention.
FIG. 7 is a topological structure diagram of a converter partially formed of first and second sub-modules provided by the present invention.
FIG. 8 is a schematic diagram of an embodiment of a control method for the converter of the present invention.
FIG. 9 is a schematic diagram of an embodiment of a control method for the converter of the present invention.
FIG. 10 is four topological structure diagrams of a protection unit for a sub-module in a converter of the present invention.
FIG. 11 is a schematic diagram of a connection manner of a protection unit for a sub-module in a converter of the present invention and the sub-module.

### DETAILED DESCRIPTION OF THE INVENTION

The technical solutions of the present invention are described in detail below in combination with accompanying drawings and specific embodiments.

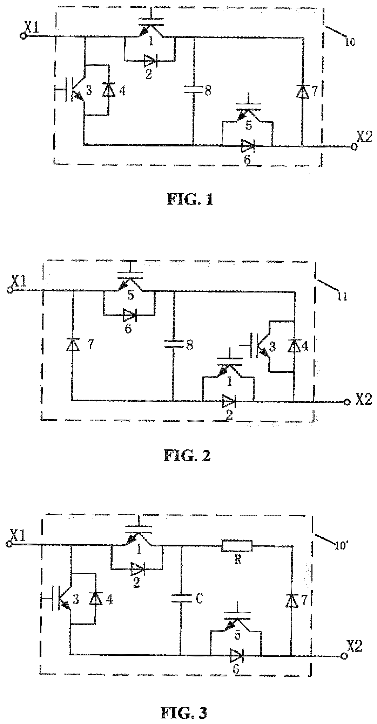

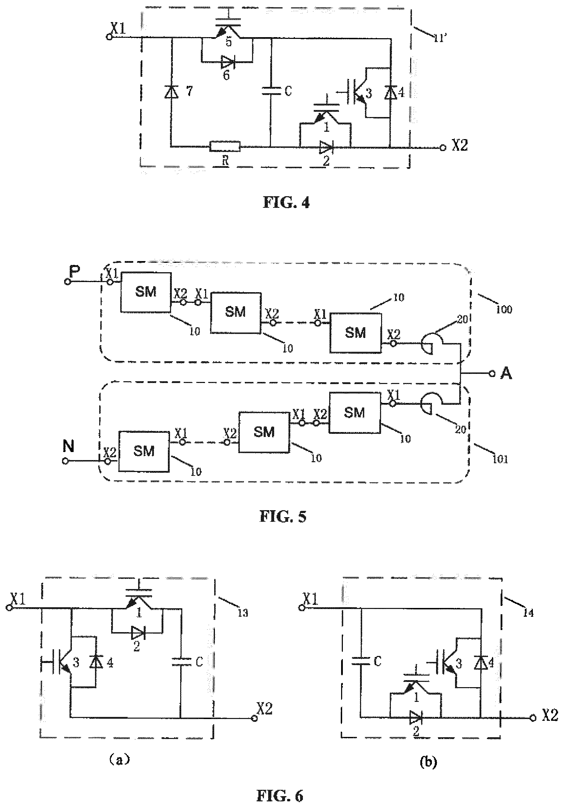

FIG. 1 to FIG. 4 are topological structure diagrams of preferred embodiments of a first sub-module to be included in a converter provided by the present invention. FIG. 1 and FIG. 2 show a situation where no resistor is contained in the freewheeling diode branch. FIG. 3 and FIG. 4 show a situation where a resistor is contained in the freewheeling diode branch.

As shown in FIG. 1 and FIG. 2, the sub-module comprises turn-off devices 1, 3, 5 in antiparallel connection with diodes and an energy storage element 8, where the turn-off device 1 is in antiparallel connection with the diode 2, the turn-off device 3 is in antiparallel connection with the diode 4, and the turn-off device 5 is in antiparallel connection with the diode 6. Each of the turn-off devices 1, 3, 5 may be a single controlled switch device (for example, a fully controlled device such as an IGBT, an IGCT, a MOSFET or a GTO, where in the submodules provided herein, the IGBT is taken as an example) and may also be of a structure formed of at least two controlled switch devices connected in series.

FIG. 1 shows a first sub-module 10. An emitter of the turn-off device 1 is connected to a collector of the turn-off device 3, with the connection point being used as a terminal X1 of the sub-module 10. A collector of the turn-off device 1 is connected to an emitter of the turn-off device 3 through the energy storage element 8. The collector of the turn-off device 1 is also connected to a cathode of a diode 7. An anode of the diode 7 is connected to a collector of the turn-off device 5, with the connection point being used as a terminal X2 of the sub-module 10. An emitter of the turn-off device 5 is connected to the emitter of the turn-off device 3.

FIG. 2 shows another first sub-module 11. An emitter of a turn-off device 5 is connected to a cathode of a diode 7, with the connection point being used as a terminal X1 of the sub-module 11. A collector of the turn-off device 5 is connected to an anode of the diode 7 through the energy storage element 8. The collector of the turn-off device 5 is also connected to a collector of the turn-off device 3. An emitter of the turn-off device 3 is connected to a collector of the turn-off device 1, with the connection point being used as a terminal X2 of the sub-module 11. An emitter of the turn-off device 1 is connected to the anode of the diode 7.

As shown in FIG. 3 and FIG. 4, the first sub-module comprises turn-off devices 1, 3, 5 in antiparallel connection with diodes and an energy storage element C, where the turn-off device 1 is in antiparallel connection with the diode 2, the turn-off device 3 is in antiparallel connection with the diode 4, and the turn-off device 5 is in antiparallel connection with the diode 6. Each of the turn-off devices 1, 3, 5 may be a single controlled switch device (for example, a fully controlled device such as an IGBT, an IGCT, a MOSFET or a GTO, where in the embodiments provided herein, the IGBT is taken as an example) and may also be of a structure formed of at least two controlled switch devices connected in series.

FIG. 3 shows a first sub-module 10'. A collector of the turn-off device 1 is connected to an emitter of the turn-off device 3, with the connection point being used as a terminal X1 of the sub-module 10'. An emitter of the turn-off device 1 is connected to a collector of the turn-off device 3 through the energy storage element C. The collector of the turn-off device 1 is also connected to a series resistor R and the other end of the series resistor is connected to a cathode of a diode 7. An anode of the diode 7 is connected to a collector of the turn-off device 5, with the connection point being used as a terminal X2 of the sub-module 10. The collector of the turn-off device 5 is connected to the collector of the turn-off device 3. Locations of the series resistor R and the diode 7 can be exchanged as long as it can be ensured that the anode of the diode 7 is connected to the terminal X2 directly or through the series resistor R.

FIG. 4 shows a first sub-module 11', which is obtained by changing the topological structure of the sub-module shown in FIG. 3 in the following manner: locations of the terminal X1 and the terminal X2 in are exchanged, locations of the collector and the emitter of each turn-off device are exchanged, and locations of the anode and the cathode of each diode are exchanged. The collector of the turn-off device 5 is connected to the cathode of the diode 7, with the connection point being used as a terminal X1 of the sub-module 11. The emitter of the turn-off device 5 is connected to one end of the series resistor R through the energy storage element C and the other end of the series resistor R is connected to the anode of the diode 7. The collector of the turn-off device 5 is also connected to the collector of the turn-off device 3. The emitter of the turn-off device 3 is connected to the collector of the turn-off device 1, with the connection point being used as a terminal X2 of the sub-module 11. The collector of the turn-off device 1 is connected to the one end of the series resistor R. Locations of the series resistor R and the diode 7 can be exchanged as long as it can be ensured that the cathode of the diode 7 is connected to the terminal X1 directly or through the series resistor R.

It should be noted that, only equivalent elements for the turn-off devices, the resistor, and the freewheeling diode are described in the embodiments of the present invention. That is to say, the turn-off devices, the resistor, and the freewheeling diode can each be formed by cascading multiple elements. For example, an equivalent resistor may be formed of multiple resistors connected in series or in parallel, an equivalent freewheeling diode may be formed of multiple freewheeling diodes connected in series or in parallel, and so on.

It should be noted that, in the first submodules described in FIG. 3 and FIG. 4, the series resistor is an equivalent representation, that is, the locations and the number of resistors and freewheeling diodes are not limited and the resistors and the freewheeling diodes can be arranged alternately.

FIG. 5 shows an example of a converter useful for understanding the present invention. Each sub-module in the converter is one of the first submodules described above. The converter comprises at least one phase unit. The specific number of phase units can be determined according to the number of AC terminals of an AC system. Each of the phase units comprises an upper bridge arm 100 and a lower bridge arm 101. Each of the upper bridge arm and the lower bridge arm comprises at least two sub-modules 10 and at least one reactor 20 connected to each other in series. The number of sub-modules and reactors comprised in the upper bridge arm may be the same as or different from the number of sub-modules and reactors comprised in the lower bridge arm. Each sub-module 10 has two terminals X1 and X2. All of the sub-modules 10 in the same bridge arm (the upper bridge arm or the lower bridge arm) are connected in the same direction and connection directions of the sub-modules in the upper bridge arm and the lower bridge arm are opposite to each other, as shown in FIG. 3. One end of the upper bridge arm 100 is used as a first DC terminal P of the phase unit to be connected to a DC network. One end of the lower bridge arm 101 is used as a second DC terminal N of the phase unit to be connected to the DC network. The other ends of the upper bridge arm 100 and the lower bridge arm 101 are jointly used as an AC terminal A of the phase unit to be connected to an AC network. It should be noted that, for the upper bridge arm 100 or the lower bridge arm 101, a series location of the sub-modules 10 and the reactors 20 is not limited and because one reactor can be formed of multiple reactors connected in series, the number of reactors is not limited as long as a total reactance value in a certain bridge arm meets a requirement corresponding to the bridge arm.

It should be noted that, the sub-module 10 in Fig. 5 may also be replaced with any one of the four first sub-modules provided above.

FIG. 6 is two topological structure diagrams of an additional (second) sub-module in the present invention. The cost of the converter can be reduced by replacing first sub-modules in the converter shown in FIG. 5 with the additional sub-module. The additional sub-module comprises turn-off devices 1, 3 in antiparallel connection with diodes and an energy storage element C, where the turn-off device 1 is in antiparallel connection with the diode 2 and the turn-off device 3 is in antiparallel connection with the diode 4. Each of the turn-off devices 1, 3 may be a single controlled switch device (for example, a fully controlled device such as an IGBT, an IGCT, a MOSFET or a GTO, where in the embodiments provided herein, the IGBT is taken as an example) and may also be of a structure formed of at least two controlled switch devices connected in series. FIG. 6(a) shows a sub-module 12. A collector of the turn-off device 1 is connected to an emitter of the turn-off device 3, with the connection point being used as a terminal X1 of the sub-module 12. An emitter of the turn-off device 1 is connected to a collector of the turn-off device 3 through the energy storage element C. The collector of the turn-off device 3 is used as a terminal X2 of the sub-module 12. FIG. 6(b) shows a sub-module 13. A collector of the turn-off device 3 is connected to an emitter of the turn-off device 1, with the connection point being used as a terminal X2 of the sub-module 13. An emitter of the turn-off device 1 is connected to a collector of the turn-off device 3 through the energy storage element C. The collector of the turn-off device 3 is used as a terminal X1 of the sub-module 12.

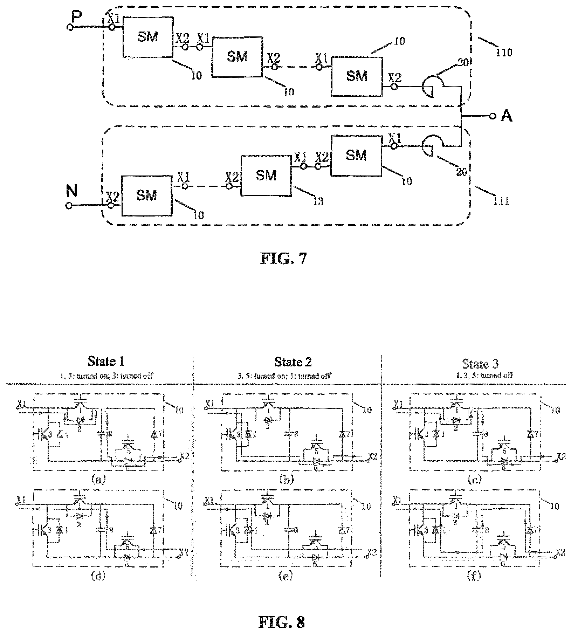

FIG. 7 shows a preferred embodiment of a converter of the present invention, where one of the first sub-modules in the lower bridge arm of the converter shown in FIG. 5 is replaced with a second sub-module 13. The number of turn-off devices is reduced, thereby saving the cost of the converter. It should be noted that, the converter obtained after replacement should comprise at least one first sub-module as provided by the present invention, and then any number of sub-modules of the present invention at any location in the converter shown in FIG. 5 can be replaced with an additional sub-module.

The present invention further provides a control method for the converter as described above, where the converter is controlled by controlling an operation state of each sub-module in the converter. The control content of the control method is described below by taking the sub-modules 10, 11 provided in FIG. 1 and FIG. 2 of the present invention as examples. The control methods for the converters formed by the sub-modules 10', 11' in FIG. 3 and FIG. 4 are similar and are not described again.

FIG. 8(a) and FIG. 8(d) are schematic diagrams of two current directions in a state 1 respectively, FIG. 8(b) and FIG. 8(e) are schematic diagrams of two current directions in a state 2 respectively, and FIG. 8(c) and FIG. 8(f) are schematic diagrams of two current directions in a state 3 respectively.

The sub-module 10 is controlled to operate in the three operation states. In the state 1, the turn-off devices 1, 5 are turned on, the turn-off device 3 is turned off, and the energy storage element C is connected to the bridge arm through the diode 2 and the diode 6 (see FIG. 8(a)) or the energy storage element C is connected to the bridge arm through the turn-off devices 5, 1 (see FIG. 8(d)), so that an output voltage (that is, a voltage of the terminal X1 relative to terminal X2) of the sub-module 10 is a voltage across the energy storage element C. In the state 2, the turn-off devices 3, 5 are turned on and the turn-off device 1 is turned off, so that a current can flow through the turn-off device 3 and the diode 6 (see FIG. 8(b)) or the turn-off device 5 and the diode 4 (see FIG. 8(e)), the energy storage element C is bypassed, and an output voltage of the sub-module 10 is 0. In the state 3, the turn-off devices 1, 3, 5 are all turned off, so that when a current flows from the terminal X1 to the terminal X2, the diode 2 and the diode 6 are turned on, the energy storage element C is connected to the bridge arm through the terminal X1 and the terminal X2, and an output voltage of the sub-module 10 is a voltage across the energy storage element C (see FIG. 8(c)); and when a current flows from the terminal X2 to the terminal X1, the diode 7 and the diode 4 are turned on, the energy storage element C is reversely connected to the bridge arm through the terminal X1 and the terminal X2 (see FIG. 8(f)), and an output voltage of the sub-module 10 is a negative number of a voltage across the energy storage element C plus a voltage across the resistor. When the sub-module operates in the state 3, the output voltage of the sub-module 10 and the current flowing in the sub-module 10 are in the opposite directions, so a fault current can be restrained and is eventually 0. The addition of the series resistor R accelerates the attenuation of the fault current.

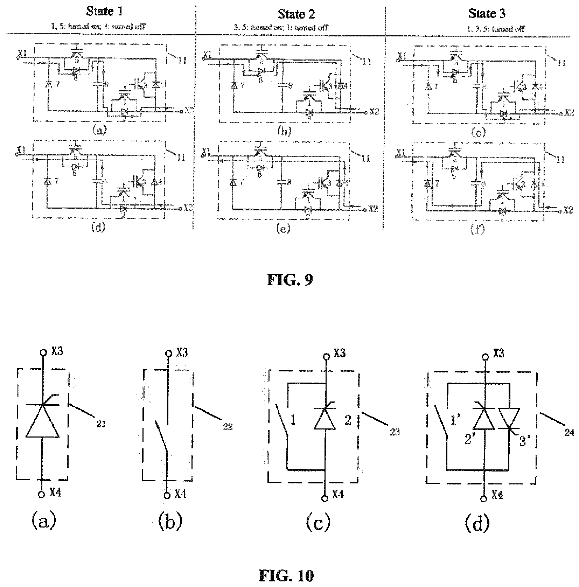

FIG. 9(a) and FIG. 9(d) are schematic diagrams of two current directions in a state 1 respectively, FIG. 9(b) and FIG. 9(e) are schematic diagrams of two current directions in a state 2 respectively, and FIG. 9(c) and FIG. 9(f) are schematic diagrams of two current directions in a state 3 respectively.

The sub-module 11 is controlled to operate in the three operation states. In the state 1, the turn-off devices 1, 5 are turned on, the turn-off device 3 is turned off, and the energy storage element C is connected to the bridge arm through the diode 6 and the diode 2 (see FIG. 9(a)) or the energy storage element C is connected to the bridge arm through the turn-off devices 1, 5 (see FIG. 9(d)), so that an output voltage (that is, a voltage of the terminal X1 relative to terminal X2) of the sub-module 11 is a voltage across the energy storage element C. In the state 2, the turn-off devices 3, 5 are turned on and the turn-off device 1 is turned off, so that a current can flow through the diode 6 and the turn-off device 3 (see FIG. 9(b)) or the diode 4 and the turn-off device 5 (see FIG. 9(e)), the energy storage element C is bypassed, and an output voltage of the sub-module 11 is 0. In the state 3, the turn-off devices 1, 3, 5 are all turned off, so that when a current flows from the terminal X1 to the terminal X2, the diode 6 and the diode 2 are turned on, the energy storage element C is connected to the bridge arm through the terminal X1 and the terminal X2, and an output voltage of the sub-module 11 is a voltage across the energy storage element C (see FIG. 9(c)); and when a current flows from the terminal X2 to the terminal X1, the diode 4 and the diode 7 are turned on, the energy storage element C is reversely connected to the bridge arm through the terminal X1 and the terminal X2 (see FIG. 9(f)), and an output voltage of the sub-module 11 is a negative number of a voltage across the energy storage element C plus a voltage across the resistor. When the sub-module operates in the state 3, the output voltage of the sub-module 11 and the current flowing in the sub-module 11 are in the opposite directions, so a fault current can be restrained and is eventually 0. The addition of the series resistor R accelerates the attenuation of the fault current.

When a ground fault occurs in the DC network, the converter is locked so that the sub-modules 10 or 11 and possibly disposed additional sub-module 12, 13 in the converter all operate in the state 3, thereby restraining the current of a bridge arm on the failure and eventually reducing it to 0. As a result, the AC network cannot provide a fault current to a fault point. When a transient fault occurs at the DC side, the fault can be removed without tripping an AC line switch, and a two-terminal or multi-terminal DC system formed of the converter provided by the present invention can have good ability of removing the fault at the DC side without a DC breaker.

In addition, the converter according to the present invention further includes a protection unit. The protection unit is used in the first sub-module and may also be used for protecting other types of full-bridge or half-bridge sub-modules. The protection unit may be of four structures. FIG. 10(a) shows a protection unit formed of a single thyristor. FIG. 10(b) shows a protection unit formed of a single high-speed switch. FIG. 10(c) shows a protection unit formed of a thyristor and a high-speed switch connected to each other in parallel. FIG. 10(d) shows a protection unit formed of antiparallel thyristors and a high-speed switch connected to each other in parallel.

FIG. 10(a) shows a protection unit 21 formed of a single thyristor, where a cathode of the thyristor is used as a terminal X3 of the protection unit 21 and an anode of the thyristor is used as a terminal X4 of the protection unit 21, so that when an overcurrent occurs in a sub-module, the protection unit 21 can be quickly turned on for shunting, thereby protecting the sub-module. FIG. 10(b) shows a protection unit 22 formed of a single high-speed switch, where one end of the high-speed switch is used as a terminal X3 of the protection unit and the other end of the high-speed switch is used as a terminal X4 of the protection unit, so that when a fault occurs in a sub-module, the faulty sub-module can be bypassed and if the bridge arm where the faulty sub-module is located has a redundant sub-module, the converter can continue to operate. FIG. 10(c) shows a protection unit 23 formed of a thyristor and a high-speed switch connected to each other in parallel, where a cathode of the thyristor is used as a terminal X3 of the protection unit, an anode of the thyristor is used as a terminal X4 of the protection unit, one end of the high-speed switch is connected to the cathode of the thyristor, and the other end of the high-speed switch is connected to the anode of the thyristor, thereby achieving overcurrent protection and active bypassing for a sub-module. FIG. 10(d) shows a protection unit 24 formed of antiparallel thyristors and a high-speed switch connected to each other in parallel, where one end of the antiparallel thyristors 2' and 3' is used as a terminal X3 of the protection unit, the other end of the antiparallel thyristors 2' and 3' is used as a terminal X4 of the protection unit, one end of the high-speed switch 1' is connected to the terminal X3, and the other end of the high-speed switch 1' is connected to the terminal X4.

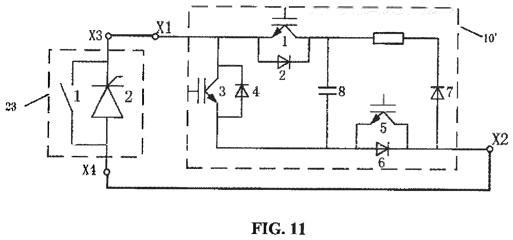

FIG. 11 is a schematic diagram of a connection manner of the protection unit 23 and the first sub-module 10. The terminal X3 of the protection unit 23 is connected to the terminal X1 of the sub-module 10 and the terminal X4 of the protection unit 23 is connected to the terminal X2 of the sub-module 10. It should be noted that, the protection unit 23 in FIG. 9 can be replaced with the protection unit 21, the protection unit 22, or the protection unit 24 and the sub-module 10 may be replaced with the first sub-module 11.

When a ground fault occurs in the DC network, the converter is locked so that the first sub-modules 10 or 11 in the converter all operate in the state 3, thereby restraining the current of the bridge arm on the fault and eventually reducing it to 0. As a result, the AC network cannot provide a fault current to a fault point. When a transient fault occurs at the DC side, the fault can be removed without tripping an AC line switch, and a two-terminal or multi-terminal DC system formed of the converter provided by the present invention can have good ability of removing the fault at the DC side without a DC breaker.

The above embodiments are only intended to describe technical ideas of the present invention and are not intended to limit the scope of the present invention which is defined in the appended claims.

## Claims

1. A converter, comprising at least one phase unit, wherein each phase unit comprises an upper bridge arm (110) and a lower bridge arm (111), each of the upper bridge arm and the lower bridge arm comprises at least two submodules (SM) and at least one reactor (20) connected to each other in series, all of the submodules in the same bridge arm are connected in the same direction, connection directions of the submodules in the upper bridge arm and the lower bridge arm are opposite to each other, one end of the upper bridge arm and one end of the lower bridge arm are used as a first direct current (DC) terminal (P) and a second DC terminal (N) of the phase unit respectively to be connected to a DC network, and the other end of the upper bridge arm and the other end of the lower bridge arm are shorted to each other as an alternating current (AC) terminal (A) of the phase unit to be connected to an AC network;
wherein a first submodule (10, 11) comprises an energy storage element (8, C), a first turn-off device (1), a second turn-off device (3), a third turn-off device (5), a freewheeling diode (7) and diodes (2, 4, 6) respectively in antiparallel connection with the turn-off devices;
wherein either of the following two types of topology is adopted in the first submodule:
1) a negative electrode of the first turn-off device is connected to a positive electrode of the second turn-off device, with the connection point being used as a first terminal (X1) of the first submodule (10), a positive electrode of the first turn-off device is connected to a negative electrode of the second turn-off device through the energy storage element, and a negative electrode of the third turn-off device is connected to the negative electrode of the second turn-off device; one end of the freewheeling diode branch is connected to the positive electrode of the first turn-off device; the other end of the freewheeling diode branch is connected to a positive electrode of the third turn-off device, with the connection point being used as a second terminal (X2) of the first submodule; and
2) a negative electrode of the third turn-off device is connected to a cathode of the freewheeling diode, with the connection point being used as a first terminal (X1) of the first submodule (11), a positive electrode of the third turn-off device is connected to a positive electrode of the second turn-off device, a negative electrode of the second turn-off device is connected to a positive electrode of the first turn-off device, with the connection point being used as a second terminal (X2) of the first submodule, and the positive electrode of the third turn-off device is connected to a negative electrode of the first turn-off device through the energy storage element; as a series branch, the freewheeling diode has one end connected to the negative electrode of the first turn-off device and the other end connected to the negative electrode of the third turn-off device;
and further wherein the first submodule (10, 11) is used as at least one of the at least two submodules (SM) of the converter; and
wherein a second submodule (13, 14) is formed of a first turn-off device (1) and a second turn-off device (3) connected to each other in series, a diode (2) in antiparallel connection with the first turn-off device, a diode (4) in antiparallel connection with the second turn-off device, and an energy storage element (C), wherein the energy storage element is connected to a series branch of the first turn-off device and the second turn-off device in parallel; and **characterised in that** the first submodule (10, 11) further comprises a protection unit (21, 22, 23, 24), wherein a first terminal (X3) of the protection unit is connected to the first terminal (X1) of the first submodule and a second terminal (X4) of the protection unit is connected to the second terminal (X2) of the first submodule;
wherein the protection unit has any one or more of the following four topological structures:
i) the protection unit (21) is formed of a thyristor, wherein a cathode of the thyristor is the first terminal of the protection unit and an anode of the thyristor is the second terminal of the protection unit;
ii) the protection unit (22) is formed of a high-speed switch, wherein one end of the high-speed switch is the first terminal of the protection unit and the other end of the high-speed switch is the second terminal of the protection unit;
iii) the protection unit (23) is formed of a thyristor and a high-speed switch connected to each other in parallel, wherein a cathode of the thyristor is the first terminal of the protection unit, an anode of the thyristor is the second terminal of the protection unit, one end of the high-speed switch is connected to the cathode of the thyristor, and the other end of the high-speed switch is connected to the anode of the thyristor; and
iv) the protection unit (24) is formed of at least two antiparallel thyristors and a high-speed switch connected to each other in parallel, wherein one end of the antiparallel thyristors is the first terminal of the protection unit, the other end of the antiparallel thyristors is the second terminal of the protection unit, one end of the high-speed switch is connected to the first terminal of the protection unit, and the other end of the high-speed switch is connected to the second terminal of the protection unit;
wherein when a fault occurs in the first submodule (10, 11), if the parallel protection unit is of the topological structure i) or ii), the thyristor is triggered or the high-speed switch is closed to protect the first submodule; if the parallel protection unit is of the topological structure iii) or iv), the thyristor is triggered and the high-speed switch is closed to protect the first submodule.

2. The converter according to claim 1, **characterized in that**, in the first submodule (10, 11) the turn-off devices (1, 3, 5) each are a single controlled switch device or is formed of at least two controlled switch devices connected in series.

3. The converter according to claim 1, **characterized in that**, in the first submodule (10, 11) the energy storage element (8, C) is a capacitor.

4. The converter according to claim 2, **characterized in that**, in the first submodule (10, 11) the controlled switch device (1, 3, 5) is an IGBT, an IEGT, an IGCT, a MOSFET or a GTO.

5. The converter according to claim 1, **characterized in that**, in the first submodule (10, 11), when the turn-off devices (1, 3, 5) are an IGBT or an IEGT, the positive electrode is a collector and the negative electrode is an emitter; when the turn-off devices are an IGCT or a GTO, the positive electrode is an anode and the negative electrode is a cathode; when the turn-off devices are a MOSFET, the positive electrode is an emitter and the negative electrode is a collector.

6. The converter according to claim 1, **characterized in that**, in the first submodule (10', 11') a resistor (R) is connected to the freewheeling diode branch in series.

7. The converter according to claim 1, **characterized in that**, in the second submodule (13) a negative electrode of the first turn-off device (1) is connected to a positive electrode of the second turn-off device (3), with the connection point being used as a first terminal (X1), and a negative electrode of the second turn-off device is used as a second terminal (X2); or alternatively in the second submodule (14) a positive electrode of the second turn-off device (3) is used as a first terminal (X1), and a negative electrode of the second turn-off device is connected to a positive electrode of the first turn-off device (1), with the connection point being used as a second terminal (X2).

8. The converter according to claim 1, **characterized in that**, in the second submodule (13, 14) the energy storage element (C) is a capacitor, the turn-off devices (1, 3) are an IGBT, an IEGT, an IGCT, a MOSFET or a GTO, when the turn-off devices are an IGBT or an IEGT, the positive electrode is a collector and the negative electrode is an emitter; when the turn-off devices are an IGCT or a GTO, the positive electrode is an anode and the negative electrode is a cathode; when the turn-off devices are a MOSFET, the positive electrode is an emitter and the negative electrode is a collector.

9. A control method for the converter according to claim 1, wherein the converter is controlled by controlling an operation state of the submodules (SM) in the converter, **characterized in that:**
the control method for the first submodule (10, 11) is as follows: in a state 1, the first turn-off device (1) and the third turn-off device (5) are turned on and the second turn-off device (3) is turned off, so that an output voltage of the first submodule is a voltage across the energy storage element; in a state 2, the second turn-off device and the third turn-off device are turned on and the first turn-off device is turned off, so that an output voltage of the first submodule is 0; in a state 3, the first turn-off device, the second turn-off device, and the third turn-off device are all turned off, an output voltage of the first submodule is determined by a current direction; the output voltage of the first submodule is a voltage of the first terminal (X1) of the first submodule relative to the second terminal (X2); and
the control method for the second submodule (13, 14) is as follows: in a state 1, the first turn-off device (1) is turned on and the second turn-off device (3) is turned off, so that an output voltage of the second submodule is a voltage across the energy storage element (C); in a state 2, the second turn-off device is turned on and the first turn-off device is turned off, so that an output voltage of the second submodule is 0; in a state 3, the first turn-off device and the second turn-off device are both turned off, an output voltage of the second submodule is determined by a current direction; the output voltage of the second submodule is a voltage of the first terminal (X1) of the second submodule relative to the second terminal (X2), wherein when it is detected that a fault occurs in a direct current (DC) system connected to the converter, all of the submodules are controlled to operate in the state 3 to lock the converter.

## Patentansprüche

1. Wandler, aufweisend zumindest eine Phaseneinheit, wobei jede Phaseneinheit einen oberen Brückenzweig (110) und einen unteren Brückenzweig (111) aufweist, der obere Brückenzweig und der untere Brückenzweig mindestens zwei Teilmodule (SM) und zumindest einen Reaktor (20) aufweist, die miteinander in Reihe verbunden sind, alle Teilmodule in demselben Brückenarm in der gleichen Richtung verbunden sind, Verbindungsrichtungen der Teilmodule in dem oberen Brückenarm und dem unteren Brückenarm einander entgegengerichtet sind, ein Ende des oberen Brückenarms und ein Ende des unteren Brückenarms als ein erster Gleichstrom (DC) -Anschluss (P) und ein zweiter Gleichstrom (DC) -Anschluss (N) der Phaseneinheit verwendet werden, die jeweils an ein Gleichstrom (DC) -Netz angeschlossen werden sollen, und das andere Ende des oberen Brückenarms und das andere Ende des unteren Brückenarms miteinander als Wechselstrom (AC) -Anschluss (A) der Phaseneinheit, die an ein Wechselstromnetz angeschlossen werden soll, kurzgeschlossen sind;
wobei ein erstes Teilmodul (10, 11) ein Energiespeicherelement (8, C), eine erste Abschaltvorrichtung (1), eine zweite Abschaltvorrichtung (3), eine dritte Abschaltvorrichtung (5), eine Freilaufdiode (7), und Dioden (2, 4, 6) aufweist, die jeweils antiparallel zu den Abschaltvorrichtungen geschaltet sind;
wobei eine der folgenden zwei Topologietypen in dem ersten Teilmodul zum Einsatz kommt:
1) eine Negativelektrode der ersten Abschaltvorrichtung ist mit einer Positivelektrode der zweiten Abschaltvorrichtung verbunden, wobei die Verbindungsstelle als erster Anschluss (X1) des ersten Teilmoduls (10) verwendet wird, eine Positivelektrode der ersten Abschaltvorrichtung ist durch das Energiespeicherelement mit einer Negativelektrode der zweiten Abschaltvorrichtung verbunden, und eine Negativelektrode der dritten Abschaltvorrichtung ist mit der Negativelektrode der zweiten Abschaltvorrichtung verbunden; ein Ende des Freilaufdiodenzweigs ist mit der Positivelektrode der ersten Abschaltvorrichtung verbunden; das andere Ende des Freilaufdiodenzweigs ist mit einer Positivelektrode der dritten Abschaltvorrichtung verbunden, wobei die Verbindungsstelle als zweiter Anschluss (X2) des ersten Teilmoduls zum Einsatz kommt; und
2) eine Negativelektrode der dritten Abschaltvorrichtung ist mit einer Kathode der Freilaufdiode verbunden, wobei die Verbindungsstelle als erster Anschluss (X1) des ersten Teilmoduls (11) verwendet wird, eine Positivelektrode der dritten Abschaltvorrichtung ist mit einer Positivelektrode der zweiten Abschaltvorrichtung verbunden, eine Negativelektrode der zweiten Abschaltvorrichtung ist mit einer Positivelektrode der ersten Abschaltvorrichtung verbunden, wobei die Verbindungsstelle als zweiter Anschluss (X2) des ersten Teilmoduls verwendet wird; und die Positivelektrode der dritten Abschaltvorrichtung ist durch das Energiespeicherelement mit einer Negativelektrode der ersten Abschaltvorrichtung verbunden; als Reihenzweig ist die Freilaufdiode ist mit einem Ende mit der Negativelektrode der ersten Abschaltvorrichtung verbunden und mit dem anderen Ende mit der Negativelektrode der dritten Abschaltvorrichtung verbunden; und wobei ferner das erste Teilmodul (10, 11) als zumindest eines der zumindest zwei Teilmodule (SM) des Wandlers verwendet wird; und wobei ein zweites Teilmodul (13, 14) aus einer ersten Abschaltvorrichtung (1) und einer zweiten Abschaltvorrichtung (3), die miteinander in Reihe verbunden sind, einer Diode (2) in antiparalleler Verbindung zu der ersten Abschaltvorrichtung, einer Diode (4) in antiparalleler Verbindung zu der zweiten Abschaltvorrichtung, und einem Energiespeicherelement (C) gebildet ist; wobei das Energiespeicherelement mit einem Reihenzweig der ersten Abschaltvorrichtung und der zweiten Abschaltvorrichtung parallel verbunden ist; und
**dadurch gekennzeichnet, dass** das erste Teilmodul (10, 11) ferner eine Schutzeinheit (21, 22, 23, 24) aufweist, wobei ein erster Anschluss (T3) der Schutzeinheit mit dem ersten Anschluss (X1) des ersten Teilmoduls verbunden ist und ein zweiter Anschluss (X4) der Schutzeinheit mit dem zweiten Anschluss (X2) des ersten Teilmoduls verbunden ist; wobei die Schutzeinheit eine oder mehr der nachfolgenden vier topologischen Strukturen aufweist:
i) die Schutzeinheit (21) ist aus einem Thyristor gebildet, wobei eine Kathode des Thyristors der erste Anschluss der Schutzeinheit ist, und eine Anode des Thyristors der zweite Anschluss der Schutzeinheit ist;
ii) die Schutzeinheit (22) ist aus einem Hochgeschwindigkeitsschalter gebildet, wobei ein Ende des Hochgeschwindigkeitsschalters der erste Anschluss der Schutzeinheit ist und das andere Ende des Hochgeschwindigkeitsschalters der zweite Anschluss der Schutzeinheit ist;
iii) die Schutzeinheit (23) aus einem Thyristor und einem Hochgeschwindigkeitsschalter gebildet ist, die miteinander parallel geschaltet sind, wobei eine Kathode des Thyristors der erste Anschluss der Schutzeinheit ist, und eine Anode des Thyristors der zweite Anschluss der Schutzeinheit ist, ein Ende des Hochgeschwindigkeitsschalters mit der Kathode des Thyristors verbunden ist, und das andere Ende des Hochgeschwindigkeitsschalter mit der Anode des Thyristors verbunden ist; und
iv) die Schutzeinheit (24) aus zumindest zwei antiparallelen Thyristoren und einem Hochgeschwindigkeitsschalter gebildet ist, die miteinander parallel verbunden sind,
wobei ein Ende der antiparallelen Thyristoren der erste Anschluss der Schutzeinheit ist, das andere Ende der antiparallelen Thyristoren der zweite Anschluss der Schutzeinheit ist, ein Ende des Hochgeschwindigkeitsschalters mit dem ersten Anschluss der Schutzeinheit verbunden ist, und das andere Ende des Hochgeschwindigkeitsschalters mit dem zweiten Anschluss der Schutzeinheit verbunden ist;
wobei, wenn es in dem ersten Teilmodul (10, 11) zu einem Fehler kommt, wenn die parallele Schutzeinheit die topologische Struktur i) oder ii) aufweist, der Thyristor ausgelöst wird oder der Hochgeschwindigkeitsschalter geschlossen wird, um das erste Teilmodul zu schützen, wenn die parallele Schutzeinheit die topologische Struktur iii) oder iv) hat, der Thyristor ausgelöst wird und der Hochgeschwindigkeitsschalter geschlossen wird, um das erste Teilmodul zu schützen.

2. Wandler nach Anspruch 1, **dadurch gekennzeichnet, dass** die Abschaltvorrichtungen (1, 3, 5) in dem ersten Teilmodul (10, 11) jeweils einfach gesteuerte Schaltvorrichtungen sind oder aus zumindest zwei gesteuerten, in Reihe geschalteten Schaltvorrichtungen gebildet sind.

3. Wandler nach Anspruch 1, **dadurch gekennzeichnet, dass** das Energiespeicherelement (8, C) in den ersten Teilmodul (10, 11) ein Kondensator ist.

4. Wandler nach Anspruch 2, **dadurch gekennzeichnet, dass** die gesteuerte Schaltvorrichtung (1, 3, 5) in dem ersten Teilmodul (10, 11) ein IGBT, ein IEGT, ein IGCT, ein MOSFET oder ein GTO ist.

5. Wandler nach Anspruch 1, **dadurch gekennzeichnet, dass** die Positivelektrode in dem ersten Teilmodul (10, 11), wenn die Abschaltvorrichtungen (1, 3, 5) ein IGBT oder ein IEGT sind, die Positivelektrode ein Kollektor und die Negativelektrode ein Emitter ist; wenn die Abschaltvorrichtungen ein IGCT oder ein GTO sind, die Positivelektrode eine Anode und die Negativelektrode eine Kathode ist, wenn die Abschaltvorrichtungen ein MOSFET sind, die Positivelektrode ein Emitter ist und die Negativelektrode ein Kollektor ist.

6. Wandler nach Anspruch 1, **dadurch gekennzeichnet, dass** in dem ersten Teilmodul (10', 11') ein Widerstand (R) mit dem Freilaufdiodenzweig in Reihe verbunden ist.

7. Wandler nach Anspruch 1, **dadurch gekennzeichnet, dass** in dem zweiten Teilmodul (13) eine Negativelektrode der ersten Abschaltvorrichtung (1) mit einer Positivelektrode der zweiten Abschaltvorrichtung (3) verbunden ist, wobei die Verbindungsstelle als erster Anschluss (X1) verwendet wird und eine Negativelektrode der zweiten Abschaltvorrichtung als zweiter Anschluss (X2) verwendet wird; oder alternativ in dem zweiten Teilmodul (14) eine Positivelektrode der zweiten Abschaltvorrichtung (3) als erster Anschluss (X1) verwendet wird, und eine Negativelektrode der zweiten Abschaltvorrichtung mit einer Positivelektrode der ersten Abschaltvorrichtung (1) verwendet wird, wobei die Verbindungsstelle als zweiter Anschluss (X2) verwendet wird.

8. Wandler nach Anspruch 1, **dadurch gekennzeichnet, dass** in dem zweiten Teilmodul (13, 14) das Energiespeicherelement (C) ein Kondensator ist, die Abschaltvorrichtungen (1, 3) ein IGBT, ein IEGT, ein IGCT, ein MOSFET oder ein GTO sind, wenn die Abschaltvorrichtungen ein IGBT oder ein IEGT sind, die Positivelektrode ein Kollektor ist und die Negativelektrode ein Emitter ist; wenn die Abschaltvorrichtungen ein IGCT oder GTO sind, die Positivelektrode eine Anode ist und die Negativelektrode eine Kathode ist; wenn die Abschaltvorrichtungen ein MOSFET sind, die Positivelektrode ein Emitter und die Negativelektrode ein Kollektor ist.

9. Verfahren zur Steuerung des Wandlers nach Anspruch 1, wobei der Wandler durch Steuern eines Betriebszustands der Teilmodule (SM) in dem Wandler gesteuert wird, **dadurch gekennzeichnet, dass:**
das Verfahren zur Steuerung des ersten Teilmoduls (10, 11) wie folgt ist: in einem Zustand 1 werden die erste Abschaltvorrichtung (1) und die dritte Abschaltvorrichtung (5) angeschaltet, und die zweite Abschaltvorrichtung (3) wird ausgeschaltet, so dass eine Ausgangsspannung des ersten Teilmoduls eine Spannung über dem Energiespeicherelement ist; in einem Zustand 2 werden die zweite Abschaltvorrichtung und die dritte Abschaltvorrichtung angeschaltet und die erste Abschaltvorrichtung wird abgeschaltet, so dass eine Ausgangsspannung des ersten Teilmoduls 0 ist, in einem Zustand 3 werden die erste Abschaltvorrichtung, die zweite Abschaltvorrichtung und die dritte Abschaltvorrichtung alle abgeschaltet, eine Ausgangsspannung des ersten Teilmoduls wird durch eine Stromrichtung ermittelt; die Ausgangsspannung des ersten Teilmoduls ist eine Spannung des ersten Anschlusses (X1) des ersten Teilmoduls relativ zum zweiten Anschluss (X2); und das Verfahren zur Steuerung des zweiten Teilmoduls (13, 14) wie folgt ist: in einem Zustand 1 werden die erste Abschaltvorrichtung (1) angeschaltet und die zweite Abschaltvorrichtung (3) ausgeschaltet, so dass eine Ausgangsspannung des zweiten Teilmoduls eine Spannung über dem Energiespeicherelement (C) ist; in einem Zustand 2 wird die erste Abschaltvorrichtung angeschaltet und die erste Abschaltvorrichtung wird ausgeschaltet, so dass eine Ausgangsspannung des zweiten Teilmoduls 0 ist; in einem Zustand 3 werden sowohl die erste Abschaltvorrichtung als auch die zweite Abschaltvorrichtung ausgeschaltet, eine Ausgangsspannung des zweiten Teilmoduls wird durch eine Stromrichtung ermittelt, die Ausgangsspannung des zweiten Teilmoduls ist eine Spannung des ersten Anschlusses (X1) des zweiten Teilmoduls relativ zum zweiten Anschluss (X2), wobei, wenn detektiert wird, dass in einem mit dem Wandler verbundenen Gleichstrom(DC)-System ein Fehler auftritt, alle Teilmodule dahingehend gesteuert werden, in Zustand 3 zu arbeiten, um den Wandler zu sperren.

## Revendications

1. Convertisseur, comprenant au moins un bloc de coupure, chaque bloc de coupure comprenant une branche de pont supérieure (110) et une branche de pont inférieure (111), chacune de la branche de pont supérieure et de la branche de pont inférieure comprenant au moins deux sous-modules (SM) et au moins un réacteur (20) connectés l'un à l'autre en série, tous les sous-modules dans la branche de pont étant connectés dans la même direction, les directions de connexion des sous-modules dans la branche de pont supérieure et la branche de pont inférieure étant opposées l'une à l'autre, une extrémité de la branche de pont supérieure et une extrémité de la branche de pont inférieure étant utilisées comme première borne en courant continu (CC) (P) et comme deuxième borne CC (N) du bloc de coupure respectivement à connecter à un réseau CC, et l'autre extrémité de la branche de pont supérieure et l'autre extrémité de la branche de pont inférieure étant court-circuitées l'une par rapport à l'autre comme borne de courant alternatif (CA) du bloc de coupure à connecter à un réseau CA ;
un premier sous-module (10, 11) comprenant un élément de stockage d'énergie (8, C), un premier dispositif de mise hors tension (1), un deuxième dispositif de mise hors tension (3), un troisième dispositif de mise hors tension (5), une diode de roue libre (7) et des diodes (2, 4, 6) respectivement en connexion antiparallèle avec les dispositifs de mise hors tension ;
l'un des deux types de topologie suivants étant adopté dans le premier sous-module :
1) une électrode négative du premier dispositif de mise hors tension est connectée à une électrode positive du deuxième dispositif de mise hors tension, le point de connexion étant utilisé comme première borne (X1) du premier sous-module (10), une électrode positive du premier dispositif de mise hors tension est connectée à une électrode négative du deuxième dispositif de mise hors tension par le biais de l'élément de stockage d'énergie, et une électrode négative du troisième dispositif de mise hors tension est connectée à l'électrode négative du deuxième dispositif de mise hors tension ; une extrémité de la branche de diode de roue libre est connectée à une électrode positive du troisième dispositif de mise hors tension, le point de connexion étant utilisé comme deuxième borne (X2) du premier sous-module ; et
2) une électrode négative du troisième dispositif de mise hors tension est connectée à une cathode de la diode de roue libre, le point de connexion étant utilisé comme première borne (X1) du premier sous-module (11), une électrode positive du troisième dispositif de mise hors tension est connectée à une électrode positive du deuxième dispositif de mise hors tension, une électrode négative du deuxième dispositif de mise hors tension est connectée à une électrode positive du premier dispositif de mise hors tension, le point de connexion étant utilisé comme deuxième borne (X2) du premier sous-module, et l'électrode positive du troisième dispositif de mise hors tension est connectée à une électrode négative du premier dispositif de mise hors tension par le biais de l'élément de stockage d'énergie ; en tant que branche série, la diode de roue libre a une extrémité connectée à l'électrode négative du premier dispositif de mise hors tension et l'autre extrémité connectée à l'électrode négative du troisième dispositif de mise hors tension ;
et le premier sous-module (10, 11) étant utilisé comme au moins l'un des au moins deux sous-modules (SM) du convertisseur ; et
un deuxième sous-module (13, 14) étant constitué d'un premier dispositif de mise hors tension (1) et d'un deuxième dispositif de mise hors tension (3) connectés l'un à l'autre en série, d'une diode (2) en connexion antiparallèle avec le premier dispositif de mise hors tension, d'une diode (4) en connexion antiparallèle avec le deuxième dispositif de mise hors tension, et d'un élément de stockage d'énergie (C), l'élément de stockage d'énergie étant connecté à une branche série du premier dispositif de mise hors tension et du deuxième dispositif de mise hors tension en parallèle ; et **caractérisé en ce que** le premier sous-module (10, 11) comprend en outre une unité de protection (21, 22, 23, 24), une première borne (X3) de l'unité de protection étant connectée à la première borne (X1) du premier sous-module et une deuxième borne (X4) de l'unité de protection étant connectée à la deuxième borne (X2) du premier sous-module ;
l'unité de protection ayant l'une quelconque ou plusieurs des quatre structures topologiques suivantes :
i) l'unité de protection (21) est constituée d'un thyristor, une cathode du thyristor étant la première borne de l'unité de protection et une anode du thyristor étant la deuxième borne de l'unité de protection ;
ii) l'unité de protection (22) est constituée d'un commutateur à haute vitesse, une extrémité du commutateur à haute vitesse étant la première borne de l'unité de protection et l'autre extrémité du commutateur à haute vitesse étant la deuxième borne de l'unité de protection ;
iii) l'unité de protection (23) est constituée d'un thyristor et d'un commutateur à haute vitesse connectés l'un à l'autre en parallèle, une cathode du thyristor étant la première borne de l'unité de protection, une anode du thyristor étant la deuxième borne de l'unité de protection, une extrémité du commutateur à haute vitesse étant connectée à la cathode du thyristor, et l'autre extrémité du commutateur à haute vitesse étant connectée à l'anode du thyristor ; et
iv) l'unité de protection (24) est constituée d'au moins deux thyristors antiparallèles et d'un commutateur à haute vitesse connectés l'un à l'autre en parallèle, une extrémité des thyristors parallèles étant la première borne de l'unité de protection, l'autre extrémité des thyristors antiparallèles étant la deuxième borne de l'unité de protection, une extrémité du commutateur à haute vitesse étant connectées à la première borne de l'unité de protection, et l'autre extrémité du commutateur à haute vitesse étant connectée à la deuxième borne de l'unité de protection ;
lorsqu'une panne se produit dans le premier sous-module (10, 11), si l'unité de protection parallèle est de structure topologique i) ou ii), le thyristor est déclenché ou le commutateur à haute vitesse est fermé pour protéger le premier sous-module ; si l'unité de protection parallèle est de structure topologique iii) ou iv), le thyristor est déclenché et le commutateur à haute vitesse est fermé pour protéger le premier sous-module.

2. Convertisseur selon la revendication 1, **caractérisé en ce que**, dans le premier sous-module (10, 11), les dispositifs de mise hors tension (1, 3, 5) sont chacun un dispositif de commutation à commande unique ou sont constitués d'au moins deux dispositifs de commutation à commande unique connectés en série.

3. Convertisseur selon la revendication 1, **caractérisé en ce que**, dans le premier sous-module (10, 11), l'élément de stockage d'énergie (8, C) est un condensateur.

4. Convertisseur selon la revendication 2, **caractérisé en ce que**, dans le premier sous-module (10, 11), le dispositif de commutation à commande (1, 3, 5) est un IGBT, un IEGT, un IGCT, un MOSFET ou un GTO.

5. Convertisseur selon la revendication 1, **caractérisé en ce que**, dans le premier sous-module (10, 11), lorsque les dispositifs de mise hors tension (1, 3, 5) sont un IGBT ou un IEGT, l'électrode positive est un collecteur et l'électrode négative est un émetteur ; lorsque les dispositifs de mise hors tension sont un IGCT ou un GTO, l'électrode positive est une anode et l'électrode négative est une cathode ; lorsque les dispositifs de mise hors tension sont un MOSFET, l'électrode positive est un émetteur et l'électrode négative est un collecteur.

6. Convertisseur selon la revendication 1, **caractérisé en ce que**, dans le premier sous-module (10', 11'), une résistance (R) est connectée à la branche de diode de roue libre en série.

7. Convertisseur selon la revendication 1, **caractérisé en ce que**, dans le deuxième sous-module (13), une électrode négative du premier dispositif de mise hors tension (1) est connectée à une électrode positive du deuxième dispositif de mise hors tension (3), le point de connexion étant utilisé comme première borne (X1), et une électrode négative du deuxième dispositif de mise hors tension est utilisée comme deuxième borne (X2) ; ou en variante, dans le deuxième sous-module (14), une électrode positive du deuxième dispositif de mise hors tension (3) est utilisée comme première borne (X1), et une électrode négative du deuxième dispositif de mise hors tension est connectée à une électrode positive du premier dispositif de mise hors tension (1), le point de connexion étant utilisé comme deuxième borne (X2).

8. Convertisseur selon la revendication 1, **caractérisé en ce que**, dans le deuxième sous-module (13, 14), l'élément de stockage d'énergie (C) est un condensateur, les dispositifs de mise hors tension (1, 3) sont un IGBT, un IEGT, un IGCT, un MOSFET ou un GTO, lorsque les dispositifs de mise hors tension sont un IGBT ou un IEGT, l'électrode positive est un collecteur et l'électrode négative est un émetteur ; lorsque les dispositifs de mise hors tension sont un IGCT ou un GTO, l'électrode positive est une anode et l'électrode négative est une cathode ; lorsque les dispositifs de mise hors tension sont un MOSFET, l'électrode positive est un émetteur et l'électrode négative est un collecteur.

9. Procédé de commande du convertisseur selon la revendication 1, le convertisseur étant commandé par la commande d'un état de fonctionnement des sous-modules (SM) dans le convertisseur,
**caractérisé en ce que** :
le procédé de commande du premier sous-module (10, 11) est le suivant : dans un état 1, le premier dispositif de mise hors tension (1) et le troisième dispositif de mise hors tension (5) sont mis sous tension et le deuxième dispositif de mise hors tension (3) est mis hors tension, de sorte qu'une tension de sortie du premier sous-module est une tension à travers l'élément de stockage d'énergie ; dans un état 2, le deuxième dispositif de mise hors tension et le troisième dispositif de mise hors tension sont mis sous tension et le premier dispositif de mise hors tension est mis hors tension, de sorte qu'une tension de sortie du premier sous-module est égale à 0 ; dans un état 3, le premier dispositif de mise hors tension, le deuxième dispositif de mise hors tension et le troisième dispositif de mise hors tension sont tous mis hors tension, une tension de sortie du premier sous-module est déterminée par une direction du courant ; la tension de sortie du premier sous-module est une tension de la première borne (X1) du premier sous-module par rapport à la deuxième borne (X2) ; et
le procédé de commande du deuxième sous-module (13, 14) est le suivant : dans un état 1, le premier dispositif de mise hors tension (1) est mis sous tension et le deuxième dispositif de mise hors tension (3) est mis hors tension, de sorte qu'une tension de sortie du deuxième sous-module est une tension à travers l'élément de stockage d'énergie (C) ; dans un état 2, le deuxième dispositif de mise hors tension est mis sous tension et le premier dispositif de mise hors tension est mis hors tension, de sorte qu'une tension de sortie du deuxième sous-module est égale à 0 ; dans un état 3, le premier dispositif de mise hors tension et le deuxième dispositif de mise hors tension sont tous deux mis hors tension, une tension de sortie du deuxième sous-module est déterminée par une direction du courant ; la tension de sortie du deuxième sous-module est une tension de la première borne (X1) du deuxième sous-module par rapport à la deuxième borne (X2),
lorsqu'il est détecté qu'une panne se produit dans un système en courant continu (CC) connecté au convertisseur, tous les sous-modules sont commandés pour fonctionner à l'état 3 pour verrouiller le convertisseur.
